Europäisches Patentamt

European Patent Office

Office européen des brevets

(19)

(11) EP 0 819 657 B1

(12) FASCICULE DE BREVET EUROPEEN

(45) Date de publication et mention
de la délivrance du brevet:
**03.11.1999 Bulletin 1999/44**

(51) Int. Cl.⁶: **C03C 14/00**

(21) Numéro de dépôt: **97401720.4**

(22) Date de dépôt: **17.07.1997**

(54) **Matériau composite à matrice vitrocéramique renforcé par des fibres et procédé d'obtention**

Faserverstärkter Verbundwerkstoff mit Glaskeramikmatrix und Verfahren zu dessen Herstellung

Fibre-reinforced glass-ceramic matrix composite material and method for its production

(84) Etats contractants désignés:
**DE FR GB**

(30) Priorité: **18.07.1996 FR 9608990**

(43) Date de publication de la demande:
**21.01.1998 Bulletin 1998/04**

(73) Titulaires:
• **SOCIETE NATIONALE D'ETUDE ET DE CONSTRUCTION DE MOTEURS D'AVIATION Snecma**
**F-75015 Paris (FR)**
• **Office National d'Etudes et de Recherches Aerospatiales "ONERA"**
**92322 Chatillon (FR)**

(72) Inventeurs:
• **Gauthier, Gérard Philippe**
**91240 - Saint Michel/Orge (FR)**
• **Verdier, Patrick Victor Auguste**
**35690 - Acigne (FR)**
• **Laurent, Yves Emile Marie Ange**
**35235 - Thorigne Fouillard (FR)**
• **Obradovic, Sussane**
**77300 Fontainebleau (FR)**
• **Sudre, Olivier Henri**
**94110 - Arcueil (FR)**

(56) Documents cités:
EP-A- 0 198 977          EP-A- 0 416 723
US-A- 5 281 559

• SHENNAWI A W A EL ET AL: "THE CRYSTALLISATION OF CELSIAN POLYMORPHS IN SOME ALKALINE EARTH ALUMINOSILICATE GLASSES" GLASS TECHNOLOGY, vol. 32, no. 4, 1 août 1991, pages 131-137, XP000219539

## Description

L'invention se rapporte aux matériaux composites et aux procédés d'obtention de tels matériaux, et plus particulièrement aux matériaux à matrice vitrocéramique renforcé de fibres ou de trichites fibres courtes monocristallines.

Les vitrocéramiques sont appréciées dans l'industrie et notamment dans l'aéronautique pour constituer des matériaux composites réfractaires. De tels matériaux sont constitués de fibres de renfort, par exemple à base de carbure de silicium SiC ou de carbure de bore $B_4C$, noyées dans une matrice vitrocéramique telle l'aluminosilicate de lithium LAS ($LiO_2$-$Al_2O_3$-$SiO_2$), de magnésium MAS ($MgO$-$Al_2O_3$-$SiO_2$), de baryum et de magnésium BMAS ($BaO$-$MgO$-$Al_2O_3$-$SiO_2$) ou de calcium CAS ($CaO$-$Al_2O_3$-$SiO_2$) ou de baryum BAS ($BaO$-$Al_2O_3$-$SiO_2$). Ils présentent une bonne aptitude à la densification par écoulement visqueux à l'état de verre entre les fibres de renfort, et la possibilité de cristalliser ensuite permet d'augmenter la résistance mécanique et la tenue en température.

Les renforts se présentent habituellement sous la forme de fibres longues à base de carbure de silicium SiC, ou bien de fibres courtes monocristallines appelées "trichites" également à base de carbure de silicium SiC, ou bien également sous la forme de fibres dont la composition contient des éléments chimiques pris dans la liste suivante : Si, C, B, O, N.

On sait que la présence des fibres de renfort confère une rupture non fragile au matériau composite. Néanmoins, les caractéristiques mécaniques du composite (contrainte à rupture, contrainte de fissuration matricielle ..) dépendent largement des contraintes résiduelles d'origine thermique. Par conséquent, la différence des coefficients de dilatation thermique entre la fibre et la matrice est un paramètre essentiel dans le contrôle des propriétés du matériau. Par exemple, les trichites à base de carbure de silicium SiC présentent un coefficient de dilatation thermique $\alpha$ allant de $3,5.10^{-6}/°C$ pour les fibres de type "Nicalon", "Nicalon" étant une marque déposée de la Société Nippon Carbon, à $4,3.10^{-6}/°C$ pour les trichites de SiC en phase $\beta$ , alors que par exemple le BAS sous la forme cristalline hexacelsian a un coefficient $\alpha=8.10^{-6}/°C$ et le CAS sous la forme cristalline anorthite un coefficient $\alpha=4,5.10^{-6}/°C$.

Un premier problème à résoudre est en conséquence de réduire et de modifier à façon l'écart entre les coefficients de dilatation thermique $\alpha$ de la matrice vitro-céramique et de la fibre dans un tel matériau composite.

On sait par l'article intitulé "Crystallization Behavior and Properties of $BaO.Al_2O_3.2SiO_2$ Glass Matrices" publié dans le Ceramic Engineering and Science Procedings Vol 11 n° 7.8.1990 que le BAS sous la forme cristalline celsian monoclinique présente un coefficient de dilatation thermique $\alpha=2,3.10^{-6}/°C$, ainsi qu'une excellente stabilité jusqu'à 1590°C. Malheureusement, c'est la forme hexacelsian qui apparait prioritairement lors de la cristallisation. L'hexacelsian est à proscrire du fait de son coefficient de dilatation $\alpha=8.10^{-6}/°C$ élevé et de sa tendance à évoluer au refroidissement vers une structure orthorhombique avec un accroissement volumique de l'ordre de 3%, ce qui crée dans le matériau des tensions internes inacceptables.

Un second problème à résoudre est d'éviter dans une matrice contenant du BAS la présence d'hexacelsian ou de son dérivé à structure orthorhombique.

On sait aussi que la présence minoritaire de l'oxyde de calcium CaO ou de carbonate de calcium $CaCO_3$ par rapport au BaO favorise la formation du celsian dans une matrice BAS, mais sans empêcher la formation intermédiaire d'hexacelsian avec les inconvénients énumérés ci-dessus. Il est en conséquence difficile de maîtriser la proportion de celsian formée dans une matrice à base de BAS, et par répercussion de contrôler le coefficient de dilatation thermique d'une telle matrice.

Un troisième problème à résoudre est d'obtenir un matériau aux caractéristiques stables et non susceptibles de dispersions en fabrication résultant du processus de cristallisation.

On connaît un procédé général d'élaboration de matériaux à matrice vitrocéramique comportant essentiellement les opération suivantes :

    a) broyage fin et mélange des constituants sous la forme d'oxydes ou de carbonates,
    b) fusion du verre et trempe à l'eau,
    c) broyage fin et mise en suspension dans un liant,
    d) enrobage de la fibre avec la poudre par trempage et bobinage,
    e) constitution d'une préforme de la pièce par assemblage de nappes de fibres,
    f) densification par chauffage à une température suffisante pour amener le verre à l'état pâteux et mise en pression, par exemple dans un four-presse,
    g) nucléation, par maintien en température du matériau,
    h) croissance des cristaux par maintien du matériau à une température supérieure.

Du fait que les vitrocéramiques, en particulier les compositions BAS et CAS, sont des matériaux réfractaires et que l'on recherche un matériau composite ayant un porosité minimale, les étapes f, g, et h s'effectuent normalement dans l'art antérieur à des températures élevées pendant une durée pouvant être importante, ce qui provoque une altération des fibres ainsi qu'une modification de la zone interfaciale au contact de la fibre qui peuvent dégrader la résistance du matériau composite.

Un quatrième problème consiste donc à réduire la température d'élaboration du matériau composite et/ou la durée du maintien du matériau par rapport à ces températures trop élevées, afin de diminuer l'altération des fibres tout en élaborant un matériau à faible porosité.

On connaît par le brevet EP 0.198.977 à priorité de la demande de brevet 15.04.85 US 723.572 un matériau composite à matrice vitrocéramique comportant du CAS et du BAS et renforcée par des fibres de carbure de silicium SiC. Selon le tableau d'expériences N° 1 colonnes 8, 9 et 10, le coefficient de dilatation thermique $\alpha$ de la matrice reste sensiblement constant et voisin de $4,5.10^{-6}/°C$ pour différentes proportions d'oxydes de calcium CaO et de baryum BaO, le baryum étant minoritaire en nombre d'atomes. Ce matériau tel que divulgué ne résout en conséquence pas le problème posé.

L'invention propose un matériau composite réfractaire à matrice vitrocéramique et fibres longues du type "trichite" à base de carbure de silicium SiC. Un tel matériau est remarquable en ce que la matrice est essentiellement composée d'aluminosilicate de calcium CAS sous la forme anorthite triclinique et d'aluminosilicate de baryum BAS sous la forme celsian monoclinique, avec un rapport molaire BaO/(BaO+CaO) compris entre 25 % et 55 %. Dans un tel matériau, la matrice a un coefficient de dilatation thermique $\alpha$ variant de $4,2.10^{-6}/°C$ à $3,5.10^{-6}/°C$ en fonction du rapport molaire BaO/(BaO+CaO), l'homme du métier réglant par ce dosage le coefficient de dilatation de la matrice pour le rendre compatible avec celui de la fibre employée.

Dans une première forme de réalisation de l'invention, la matrice du matériau composite a un rapport molaire BaO/(BaO+CaO) compris entre 25% et 35% et prend de ce fait un coefficient de dilatation thermique entre $4,2.10^{-6}/°C$ et $4.10^{-6}/°C$. Le procédé d'obtention tel que décrit est remarquable en ce que les composants sont mélangés dans les proportions massiques suivantes :

| CaO | 7% à 19% |
|---|---|
| BaO | 8% à 23% |
| BaO/(CaO+BaO) | 47% à 60% |
| $Al_2O_3$ | 14,5% à 45% |
| $SiO_2$ | 34% à 52% |

Avantageusement, les phases de densification et de nucléation se feront à basse température entre 800°C et 1000°C, ce qui permet de réduire la dégradation des fibres ou des trichites et de la région interfaciale au voisinage desdites fibres ou trichites. Une pression de 1MPa à 10MPa selon la température utilisée est suffisante pour obtenir la densification de la matrice.
Avantageusement aussi, la phase de croissance des cristaux se fera aussi à une température basse comprise entre 1100°C et 1400°C.

Dans une seconde forme de réalisation de l'invention, le rapport molaire BaO/(BaO+CaO) du matériau de la matrice est compris entre 35% et 55%, ce matériau prenant de ce fait un coefficient de dilatation thermique Â compris entre $4.10^{-6}/°C$ et $3,5.10^{-6}/°C$. Le procédé d'obtention tel que décrit est remarquable en ce que :

a) Les oxydes sont mélangés dans les proportions massiques suivantes :

| CaO | 5,2% à 15,5% |
|---|---|
| BaO | 11,5% à 33,2% |
| BaO/(CaO+BaO) | 60% à 77% |
| $Al_2O_3$ | 13,4% à 43,5% |
| $SiO_2$ | 31,5% à 50,9% |

b) Un recuit est effectué à une température pouvant aller de 1100°C à 1500°C pendant une durée t égale ou supérieure à une valeur donnée par la formule expérimentale suivante :

$$t >= 10^{(9,5 - 0,0066T)}$$

avec

t= durée du recuit exprimée heures
T= température du recuit exprimée en °C

Avantageusement, on pourra ajouter dans tous les cas 1 à 4% d'oxyde de zirconium $ZrO_2$ pour homogénéiser la nucléation et par répercussion la taille des grains dans la matrice

On comprend que dans un matériau composite conforme à l'invention, le coefficient de dilatation thermique du matériau de la matrice peut être réglé sur celui de la fibre en ajustant les proportions respectives du BAS sous la forme de celsian monoclinique majoritaire dont le coefficient de dilatation thermique Â est égal à $2,3.10^{-6}/°C$. et du CAS sous la forme d'anorthite triclinique majoritaire dont le coefficient de dilatation thermique Â est égal à $4,5.10^{-6}/°C$. Une analyse de diffraction aux rayons X a montré que l'hexacelsian ou le BAS sous sa forme orthorhombique sont absents du matériau, au moins à des proportions décelables avec ce procédé. Ainsi, l'anorthite en grande quantité assure dans ce matériau deux fonctions :

- augmenter le coefficient de dilatation thermique dudit matériau,
- favoriser la formation de celsian monoclinique et empêcher la présence de l'hexacelsian ou du BAS orthorhombique.

Avec un rapport molaire BaO/(BaO+CaO) inférieur à 35%, la seule présence de l'anorthite triclinique CAS en tant que composant majoritaire est suffisante pour empêcher l'apparition de l'hexacelsian.

Avec un rapport molaire BaO/(BaO+CaO) supérieur à 35%, l'apparition d'hexacelsian a été constatée à la fin de la phase de cristallisation. Cet hexacelsian est parfaitement détectable par diffraction aux rayons X et provoque une remontée du coefficient de dilatation thermique Â du matériau de la matrice. Il a cependant été constaté qu'un recuit ou un prolongement de la durée de la phase de cristallisation permettait de transformer cet hexacelsian en celsian monoclinique, avec au pire un résidu d'hexacelsian non décelable par diffraction aux rayons X

Un premier avantage de l'invention est de permettre la maîtrise de l'adéquation entre les coefficients de dilatation thermiques du matériau de la matrice et de la fibre. L'homme du métier peut en effet aisément déterminer par quelques expériences le rapport massique optimal donnant la meilleure adéquation, soit avec un coefficient de dilatation thermique a du matériau de la matrice un peu supérieur, égal ou un peu inférieur à celui de la fibre, en fonction de l'effet recherché tel la présence ou l'absence de précontraintes internes à froid et la localisation de ces précontraintes dans la fibre ou dans la matrice. Le rapport massique optimal étant établi, le matériau composite peut être aisément reproduit avec les mêmes caractéristiques par le simple dosage de l'oxyde de calcium CaO et de l'oxyde de baryum BaO. Un autre avantage de l'invention est de permettre l'adéquation des coefficients de dilatation thermique $\alpha$ entre fibre et matrice pour la quasi-totalité des fibres de SiC disponibles sur le marché et dont les coefficients de dilatation thermique varient habituellement de $3,5.10^{-6}/°C$ à $4,3.10^{-6}/°C$.

Un autre avantage enfin de l'invention est de permettre, au moins pour les rapports massiques BaO/(BaO+CaO) les plus faibles, un procédé d'élaboration n'exigeant pas des températures élevées, pendant longtemps, ce qui réduit la dégradation des fibres et de la région interfaciale au voisinage desdites fibres.

L'invention sera mieux comprise et les avantages qu'elle procure apparaîtront plus clairement au vu de deux exemples de réalisation.

Dans une première forme de réalisation de l'invention, les composants sont mélangés dans les proportions massiques suivantes :

| CaO | 10,21% |
|------|--------|
| BaO | 14,43% |
| Al$_2$O$_3$ | 36,10% |

(suite)

| SiO$_2$ | 39,25% |
|---------|--------|
| ZrO$_2$ | +4% ajoutés, |
| ce qui correspond à un rapport BaO/(BaO+CaO) | |
| en masse | 0,58 |
| en moles | 0,33 |

Le procédé précédemment décrit au titre de l'état de la technique est appliqué dans les conditions suivantes :

- montée en température sous vide à 10°C/minute avec un palier suffisant à 350°C pour pyrolyser les liants organiques,
- ensuite montée en température à 10°C/minute jusqu'à 930°C, avec introduction d'azote à une pression d'environ 0,1 MPa, soit environ 1 bar vers 600°C,
- densification et nucléation à la température de 930°C sous une pression de 8 MPa pendant une heure,
- montée en température à 10°C/minute jusqu'à 1350°C avec maintien à cette température pour achever la cristallisation de la matrice.

Le matériau de matrice obtenu dans ces conditions a un coefficient de dilatation thermique $\alpha$ égal à 4,05.10-6/°C. Une analyse par diffraction de rayons X a montré que la matrice est exempte d'hexacelsian. D'une façon générale, l'absence d'hexacelsian a été observée pour tous les rapports molaires BaO/(BaO+CaO) inférieurs à 0,35.

Dans une seconde forme de réalisation de l'invention, les composants sont mélangés dans les proportions massiques suivantes :

| CaO | 8,92% |
|------|-------|
| BaO | 20,17% |
| Al$_2$O$_3$ | 33,78% |
| SiO$_2$ | 37,13% |
| ZrO$_2$ | + 3% ajoutés, |
| ce qui correspond à un rapport BaO/(BaO+CaO) | |
| en masse | 0,69 |
| en moles | 0,45 |

A l'issue du procédé tel que décrit dans l'exemple précédent, le coefficient de dilatation thermique $\alpha$

est égal à $4,8.10^{-6}$/°C et une analyse par diffraction de rayons X a montré une forte présence d'hexacelsian. Cet hexacelsian est alors transformé en celsian par une opération complémentaire de recuit à 1450°C pendant une heure. Une analyse par diffraction de rayons X montre alors une phase majoritaire de celsian et l'absence d'hexacelsian, au moins dans des proportions décelables par ce procédé d'analyse après recuit.

On notera que les phases de nucléation et de croissance des cristaux sont effectuées dans un four-presse, mais que la phase de recuit complémentaire peut être effectuée dans un four ordinaire.

La présente invention ne saurait être confondue avec le brevet EP 0.198.977 tableau 1 colonnes 8,9 et 10 précédemment cité au titre de l'état de la technique. En effet, ce brevet ne suggère pas :

a) la présence de phases majoritaires anorthite triclinique et celsian monoclinique avec absence d'hexacelsian dans une plage de rapports molaires BaO/(BaO+CaO) allant de 25% à 55%, avec un coefficient de dilatation thermique $\alpha$ entre $4,2.10^{-6}$/°C et $3,5.10^{-6}$/°C réglable par le dosage des composants BaO et CaO,

b) l'existence d'une plage de rapports molaires BaO/(BaO+CaO) comprise entre 25% et 35% dans laquelle le coefficient de dilatation thermique Â est abaissé vers $4.10^{-6}$/°C,

c) l'existence d'une plage de rapports molaires BaO/(BaO+CaO) comprise entre 35% et 55% avec un coefficient de dilatation thermique abaissé et réglable dans les mêmes conditions, les coefficients de dilatation thermique très supérieurs pour les matériaux divulgués dans les colonnes deux et trois du tableau 1 du brevet EP 0.198.977 révélant une forte présence d'hexacelsian dans cette plage de rapports molaires, au contraire du matériau de la présente invention.

## Revendications

1. Matériau composite à matrice vitrocéramique et fibres de renfort caractérisé en ce que :

   a) les fibres sont à base de carbure de silicium SiC, ou à base d'une composition contenant des éléments chimiques pris dans la liste suivante : Si, B, O, N, C.
   b) la matrice comporte essentiellement de l'aluminosilicate de calcium et de baryum avec un rapport molaire BaO/(BaO+CaO) compris entre 25% et 55%,
   c) les phases majoritaires du matériau de la matrice sont l'anorthite triclinique et le celsian monoclinique.

2. Matériau conforme à la revendication 1, caractérisé en ce que le rapport molaire BaO/(BaO+CaO) est compris entre 25% et 35%, ce qui correspond à un rapport massique de 47% à 60%, permettant un cycle thermique de durée réduite avec un coefficient de dilatation thermique a réglable entre $4,2.10^{-6}$/°C et $4.10^{-6}$/°C.

3. Matériau conforme à la revendication 1, caractérisé en ce que le rapport molaire BaO/(BaO+CaO) est compris entre 35% et 55%, ce qui correspond à un rapport massique de 60% à 77%, permettant un réglage du coefficient de dilatation thermique entre $4.10^{-6}$/°C et $3,5.10^{-6}$/°C.

4. Procédé de réalisation du matériau conforme à la revendication 2, ledit procédé comportant notamment les opérations : broyage des oxydes, fusion, trempe, broyage fin, mise en suspension dans un liant, enrobage des fibres, bobinage, constitution de préformes, densification par chauffage et compression, nucléation et croissance des cristaux, caractérisé en ce que les oxydes sont dosés dans les proportions massiques suivantes :

| CaO | 7% à 19% |
|---|---|
| BaO | 8% à 23% |
| BaO/(BaO+CaO) | 47% à 60% |
| $Al_2O_3$ | 14,5% à 45% |
| $SiO_2$ | 34% à 52% |

5. Procédé conforme à la revendication 4, caractérisé en ce que la densification s'effectue à partir d'une température de 800°C.

6. Procédé conforme à la revendication 4 ou 5, caractérisé en ce que la nucléation s'effectue à des températures comprises entre 800°C et 1000°C.

7. Procédé conforme à l'une des revendications 4, 5 ou 6 caractérisé en ce que la phase de croissance des cristaux s'effectue à des températures comprises entre 1100°C et 1400°C.

8. Procédé de réalisation du matériau conforme à la revendication 3, ledit procédé comportant notamment les opérations : broyage des oxydes, fusion, trempe, broyage fin, mise en suspension dans un liant d'enrobage des fibres, bobinage, constitution de préformes, densification par chauffage et compression, nucléation et croissance des cristaux, caractérisé en ce que les oxydes sont dosés dans les proportions massiques suivantes :

| | |
|---|---|
| CaO | 5,2 % à 15,5 % |
| BaO | 11,5 % à 33,2 % |
| BaO/(BaO+CaO) | 60 % à 77 % |
| $Al_2O_3$ | 13,4 % à 43,5 % |
| $SiO_2$ | 31,5 % à 50,9 % |

et en ce que la phase de croissance des cristaux est prolongée par un recuit entre 1100°C et 1500°C pendant une durée t exprimée en heures au moins égale à $10^{(9,5 - 0,0066T°C)}$, afin de transformer l'hexacelsian en celsian.

9. Procédé conforme à la revendication 8, caractérisé en ce que la densification s'effectue à partir d'une température de 800°C.

10. Procédé conforme à la revendication 8 ou 9, caractérisé en ce que la nucléation s'effectue à des températures comprises entre 800°C et 1000°C.

11. Procédé conforme à l'une des revendications 8, 9 ou 10, caractérisé en ce que la phase de croissance des cristaux s'effectue à des températures comprises entre 1100°C et 1400°C.

**Claims**

1. Composite material with a vitroceramic matrix and reinforcing fibres, characterized in that:

   a) the fibres are based on silicon carbide SiC or based on a composition containing chemical elements taken from the following list: Si, B, O, N, C,
   b) the matrix comprises essentially aluminosilicate of calcium and barium with a BaO/(BaO+CaO) molar ratio of between 25 % and 55 %,
   c) the predominant phases in the matrix material are triclinic anorthite and monoclinic celsian.

2. Material in accordance with Claim 1, characterized in that the BaO/(BaO+CaO) molar ratio is between 25 % and 35 %, which corresponds to a mass ratio of 47 % to 60 %, allowing a thermal cycle of reduced duration with a thermal expansion coefficient $\alpha$ adjustable between $4.2 \times 10^{-6}$/°C and $4 \times 10^{-6}$/°C.

3. Material in accordance with Claim 1, characterized in that the BaO/(BaO+CaO) molar ratio is between 35 % and 55 %, which corresponds to a mass ratio of 60 % to 77 %, allowing an adjustment of the thermal expansion coefficient between $4 \times 10^{-6}$/°C and $3.5 \times 10^{-6}$/°C.

4. Process for production of the material in accordance with Claim 2, the said process comprising especially the operations: grinding of the oxides, melting, quenching, fine grinding, suspending in a binder, coating of the fibres, reeling, making up preforms, densification by heating and compression, nucleation and crystal growth, characterized in that the oxides are measured out in the following mass proportions:

| | |
|---|---|
| CaO | 7 % to 19 % |
| BaO | 8 % to 23 % |
| BaO/(BaO+CaO) | 47 % to 60 % |
| $Al_2O_3$ | 14.5 % to 45 % |
| $SiO_2$ | 34 % to 52 % |

5. Process in accordance with Claim 4, characterized in that the densification is performed starting at a temperature of 800°C.

6. Process in accordance with Claim 4 or 5, characterized in that the nucleation is performed at temperatures of between 800°C and 1000°C.

7. Process in accordance with one of Claims 4, 5 or 6, characterized in that the crystal growth stage is performed at temperatures of between 1100°C and 1400°C.

8. Process for the production of the material in accordance with Claim 3, the said process comprising especially the operations: grinding of the oxides, melting, quenching, fine grinding, suspending in a binder for coating the fibres, reeling, making up preforms, densifying by heating and compression, nucleation and crystal growth, characterized in that the oxides are measured out in the following mass proportions:

| | |
|---|---|
| CaO | 5.2 % to 15.5 % |
| BaO | 11.5 % to 33.2 % |
| BaO/(BaO+CaO) | 60 % to 77 % |
| $Al_2O_3$ | 13.4 % to 43.5 % |

(suite)

| SiO$_2$ | 31.5 % to 50.9 % |
|---|---|

and in that the crystal growth stage is extended by an annealing between 1100°C and 1500°C for a period t, expressed in hours, which is at least equal to $10^{(9.5 - 0.0066 \, T°C)}$. in order to convert the hexacelsian to celsian.

9. Process in accordance with Claim 8, characterized in that the densification is performed from a temperature of 800°C.

10. Process in accordance with Claim 8 or 9, characterized in that the nucleation is performed at temperatures of between 800°C and 1000°C.

11. Process in accordance with one of Claims 8, 9 or 10, characterized in that the crystal growth stage is performed at temperatures of between 1100°C and 1400°C.

**Patentansprüche**

1. Verbundwerkstoff Glaskeramikmatrix und Verstärkungsfasern,
**dadurch gekennzeichnet, daß**:

   a) die Fasern auf Basis von Siliziumkohlenstoff SiC oder auf Basis einer Zusammensetzung bestehen, die chemische Elemente aus der folgenden Liste enthält; Si, B, O, N, C.
   b) die Matrix im wesentlichen Kalzium- und Barium-Aluminosilikat mit einem Molverhältnis BaO/(BaO+CaO) zwischen 25% und 55% enthält,
   c) die Hauptphasen des Matrixmaterials in triklinischem Anorthit und monoklinishem Celsian bestehen.

2. Werkstoff nach Anspruch 1, **dadurch gekennzeichnet, daß** das Molverhältnis BaO / (BaO + CaO) zwischen 25% und 35% beträgt, was einem Masseverhältnis von 47% bis 60% entspricht, wodurch ein Wärmebearbeitungszyklus von geringerer Dauer mit einem zwischen 4,2 . $10^{-6}$ /°C und 4 . $10^{-6}$ /°C einstellbaren Wärmeausdehnungskoeffizient α ermöglicht wird.

3. Werkstoff nach Anspruch 1, **dadurch gekennzeichnet, daß** das Molverhältnis BaO / (BaO + CaO) zwischen 35% und 55% beträgt, was einem Masseverhältnis von 60% bis 77% entspricht, wodurch eine Einstellung des Wärmeausdehnungskoeffizienten zwischen 4 . $10^{-6}$ /°C und 3,5 . $10^{-6}$ /°C ermöglicht wird.

4. Verfahren zur Herstellung des Werkstoffs nach Anspruch 2, wobei dieses Verfahren insbesondere die Vorgänge aufweist: Zerkleinerung der Oxide, Schmelzen, Härten, Feinzerkleinerung, Suspension in einem Bindemittel, Umhüllen der Fasern, Aufspulen, Bildung von Vorformlingen, Dichtbrennen durch Erhitzen und Pressen, Auskristallisierung und Wachstum der Kristalle, **dadurch gekennzeichnet, daß** die Oxide in den folgenden Masseverhältnissen dosiert sind:

| CaO | 7% bis 19% |
|---|---|
| BaO | 8 % bis 23 % |
| BaO/ (BaO+CaO) | 47% bis 60% |
| Al$_2$O$_3$ | 14,5% bis 45% |
| SiO$_2$ | 34% bis 52% |

5. Verfahren nach Anspruch 4, **dadurch gekennzeichnet, daß** das Dichtbrennen ab einer Temperatur von 800 °C erfolgt.

6. Verfahren nach Anspruch 4 oder 5, **dadurch gekennzeichnet, daß** die Auskristallisierung bei Temperaturen zwischen 800 °C und 1000 °C erfolgt.

7. Verfahren nach einem der Ansprüche 4,5 oder 6, **dadurch gekennzeichnet, daß** die Phase des Wachstums der Kristalle bei Temperaturen zwischen 1100 °C und 1400 °C erfolgt.

8. Verfahren zur Herstellung des Werkstoffs nach Anspruch 3, wobei dieses Verfahren insbesondere die Vorgänge aufweist: Zerkleinerung der Oxide, Schmelzen, Härten, Feinzerkleinerung, Suspension in einem Bindemittel, Umhüllen der Fasern, Aufspulen, Bildung von Vorformlingen, Dichtbrennen durch Erhitzen und Pressen, Auskristallisierung und Wachstum der Kristalle, **dadurch gekennzeichnet, daß** die Oxide in den folgenden Masseverhältnissen dosiert sind:

| CaO | 5,2% bis 15,5% |
|---|---|
| BaO | 11,5% bis 33,2% |
| BaO/ (BaO+CaO) | 60 % bis 77 % |
| Al$_2$O$_3$ | 13,4% bis 43,5% |
| SiO$_2$ | 31,5% bis 50,9% |

und daß die Phase des Wachstums der Kristalle durch ein Glühen bei 1100 °C bis 1500 °C über eine Dauer t, ausgedrückt in Stunden, von mindestens $10^{(9{,}5-0{,}0066\ T\ °C)}$ verlängert wird, um das Hexacelsian in Celsian zu verwandeln.

9. Verfahren nach Anspruch 8, **dadurch gekennzeichnet, daß** das Dichtbrennen ab einer Temperatur von 800 °C erfolgt.

10. Verfahren nach Anspruch 8 oder 9, **dadurch gekennzeichnet, daß** die Auskristallisierung bei Temperaturen zwischen 800 °C und 1000 °C erfolgt.

11. Verfahren nach einem der Ansprüche 8, 9 oder 10, **dadurch gekennzeichnet, daß** die Phase des Wachstums der Kristalle bei Temperaturen zwischen 1100 °C und 1400 °C erfolgt.